# EUROPÄISCHE PATENTSCHRIFT

(11) **EP 0 598 993 B1**
(45) Veröffentlichungstag und Bekanntmachung des Hinweises auf die Patenterteilung: **19.03.1997**
(21) Anmeldenummer: 93113402.7
(22) Anmeldetag: 23.08.1993
(51) Int. Cl.: B60P 1/00, B60P 1/54

(54) **Fahrzeug zum Transport von Gütern oder Anhänger hierfür**
Vehicle or trailer for transporting goods
Véhicule ou remorque pour le transport de marchandises

(30) Priorität: 23.11.1992 DE 9215821 U
(43) Veröffentlichungstag der Anmeldung: 01.06.1994
(73) Patentinhaber: BLOMENRÖHR FAHRZEUGBAU GmbH, D-59590 Geseke (DE)
(72) Erfinder: Blomenröhr, Anton, D-59590 Geseke-Langeneicke (DE)
(74) Vertreter: Herrmann-Trentepohl, Werner, Dipl.-Ing.

(56) Entgegenhaltungen:
- DE-B- 1 580 265
- DE-U- 1 896 979
- DE-U- 8 617 692
- US-A- 3 561 621
- US-A- 3 741 604

## Beschreibung

Die Erfindung betrifft ein Gütertransportfahrzeug gemäß den Merkmalen des Oberbegriffs von Ausprüch 1 und bezieht sich insbesondere auf einen Lastkraftwagen oder Auflieger mit einer Ladefläche für vorzugsweise palettierte Güter.

Derartige Fahrzeuge sind bereits bekannt. Als Fahrzeuge für den Transport von palettierten Gütern weisen sie in der Regel eine ebene Ladefläche auf, die beispielsweise von einer oder mehrerer Platten gebildet wird. Das gilt auch für die Anhänger oder Auflieger.

Derartige Fahrzeuge mit einer ebenen Ladefläche bieten den Vorteil, daß das zu transportierende Gut auf diese Ladefläche leicht aufgeladen und darauf verschoben werden kann.

Probleme ergeben sich bei solchen Fahrzeugen immer dann, wenn von dem Fahrzeug ein bestimmtes Transportgut abgeladen werden soll, das jedoch von den an sich zugänglichen Außenseiten des Fahrzeugs oder Hängers nicht zugänglich ist. Insbesondere beim Transport von palettierten Getränken kann dies häufiger vorkommen, vor allem dann, wenn nur eine ganz geringe Menge der zu transportierenden Ware abgenommen wird. Um die Ware optimal auf der Ladefläche anzuordnen, d. h. den zur Verfügung stehenden Laderaum gut auszunutzen, werden die zu transportierenden Waren entsprechend raumsparend gestapelt. Dabei kann in der Regel nicht, zumindest jedoch nicht vorrangig darauf geachtet werden, wann das jeweilige Gut abgeladen werden muß.

Beim Entladen ist es daher erforderlich, zunächst andere Waren abzuladen, bis man die entsprechende gewünschte Ware erreicht. Dies ist sehr arbeits- und zeitaufwendig.

Ein weiterer Nachteil, der häufig beim Entladen der Fahrzeuge auftritt, ist darin zu sehen, daß die palettierten Güter häufig schwer und unhandlich zu bewegen sind. In der Regel werden daher hierfür Gabelstapler verwendet. In der Praxis wurde jedoch festgestellt, daß nicht jedes einzelne Ladengeschäft über einen Gabelstapler verfügt, so daß das Heraussuchen und Abladen der entsprechenden Ware, insbesondere, wenn es sich um eine schwere Palette handelt, Schwierigkeiten verursacht. Das Mitführen eines Gabelstaplers ist in der Regel für einen Transportunternehmer nicht möglich, wenn die Gabelstapler eine bestimmte Höhe aufweisen und die Gütertransportfahrzeuge nicht für den Transport von Gabelstaplern ausgelegt sind. Damit ist für den Gabelstapler ein aufwendiges Hebezeug oder eine relativ lange Rampe erforderlich, da Gabelstapler nur eine bestimmte Steigung sicher bewältigen können.

Ein anderer Weg, der die vorgenannten Probleme vermeidet, ist Gegenstand der US-A-3 561 621 welche den nächstliegenden Stand des Technik darstellt. Dort ist vorgesehen, im hinteren Bereich des Fahrzeuges eine gegenüber der Ladefläche nach unten versetzte weitere Fläche, die sogenannte Staplerfläche, die auch als Tiefbett bezeichnet werden kann, anzuordnen, die sich zur Aufnahme eines Gabelstaplers eignet. Um von der Hinterseite des Fahrzeugs zugänglich zu sein, erstreckt sich die Staplerfläche am hinteren Ende des Fahrzeuges quer zur Ladefläche. Dies bedeutet, daß die Staplerfläche so bemessen ist, daß der Gabelstapler auf diese Fläche paßt. Durch die gegenüber der Ladefläche nach unten versetzte Staplerfläche ist die Höhe des Fahrzeugs vergrößert.

Bei dem vorbekannten Fahrzeug ist allerdings der untere Rahmen an den Fahrzeugrahmen angehängt und verlängert dadurch das als Auflieger ausgebildete Fahrzeug. Der Gabelstapler steht quer zur Ladefläche auf der Staplerfläche des unteren Rahmens. Deswegen kann die Mitte der Ladefläche mit dem Gabelstapler weder be- noch entladen werden. Die Ladefläche erstreckt sich auf der durch die Sattelkupplung der Zugmaschine bestimmten Höhe.

Es ist jedoch auch ein Kleinlastwagen bekannt (DE-U-86 17 692.7), bei dem trotz störender Radkästen eine mit den äußeren Längskanten der Radkästen fluchtende Ladefläche vorgesehen ist und bei der so vergrößerten Ladefläche auch Unterbringungsmöglichkeiten für kleinere Gerätschaften vorhanden sind, da im Abstand von mindestens der Radkastenbreite von den Längsseiten der Ladefläche und parallel zu diesen auf der Ladefläche Zwischenwände befestigt sind, deren Höhe gleich der Höhe der Bordwände und deren jeweilige Enden über Querwände mit den seitlichen Bordwänden verbunden sind. Deswegen ist die Ladefläche für einen Stapler ebenfalls auf dem Fahrgestell angeordnet, so daß die Ladehöhe durch einen Gabelstapler erheblich vergrößert und dadurch der Laderaum verkleinert wird.

Der Erfindung liegt die Aufgabe zugrunde, trotz bestehender Bedenken das Be- und Entladen der Ladefläche aus der Mitte des Fahrzeuges heraus zu ermöglichen, dabei jedoch Schwierigkeiten zu vermeiden, die durch die vorgegebene Ladehöhe bedingt sind.

Diese Aufgabe löst die Erfindung mit den Merkmalen des kennzeichnenden Teiles von Anspruch 1; weitere Merkmale der Erfindung sind Gegenstand der Unteransprüche.

Bei dem erfindungsgemäßen Fahrzeug ist nicht nur das Mitführen eines Gabelstaplers ohne weiteres möglich, es wird auch das Entladen erheblich erleichtert. Das Entladen geschieht nämlich in jedem Fall mit Hilfe des Gabelstaplers und kann nicht nur von den Seiten der Ladefläche aus erfolgen, sondern auch aus der Mitte der Ladefläche heraus, die sich an die Staplerfläche anschließt. Insgesamt verliert das erfindungsgemäße Fahrzeug zwar durch die Staplerfläche an Ladefläche bzw. an Ladevolumen. Allerdings hat sich in der Praxis, insbesondere beim Transport von palettierten Getränken herausgestellt, daß die Fahrzeuge in der Regel nicht zu 100 % beim Transport dieser Güter ausgelastet sind. Erfindungsgemäß wurde vielmehr festgestellt, daß die Möglichkeit der besseren Entladung und der Mitnahme eines Gabelstaplers den Nachteil des verringerten Ladevolumen aufwiegt. Da die Staplerebene schließlich gegenüber der Ladeebene nach unten versetzt ist, muß nur ein geringer Höhenunterschied überwunden werden, um den Stapler aufzuladen.

Bei der Erfindung stellt der untere Rahmen das Chassis dar und ist mit wenigstens einem Achsaggregat verbunden. Die beiden Rahmen sind in der Draufsicht mindestens im vorderen Bereich etwa deckungsgleich. Der obere Rahmen erstreckt sich über den gesamten Bereich des Fahrzeuges. Die Absenkung in der Staplerfläche war bisher nicht möglich, da das Absenken mit erheblichen Schwierigkeiten verbunden ist. Die Staplerfläche muß nämlich beispielsweise bei einem Lkw schon aufgrund der Achsaggregate eine gewisse Höhe aufwei sen. Bei einem Fahrzeug ist die Staplerfläche durch das Kupplungselement bzw. den Kupplungsbalken bestimmt, der unterhalb der Ladefläche am Chassis des Fahrzeuges befestigt ist, während bei einem Auflieger die Ladehöhe durch den Königsbolzen vorgegeben ist, dessen Höhe wiederum von der Kupplungshöhe der Zugmaschine abhängt. Erfindungsgemäß werden diese Schwierigkeiten dadurch vermieden, daß die Staplerfläche auf dem Fahrzeugrahmen und die Ladefläche darüber auf einem weiteren Rahmen liegt. Zum Transport von palettierten Gütern ist eine durchgehend ebene Ladefläche trotz Verkleinerung der Ladefläche durch die Staplerfläche möglich.

Um das Aufladen eines Staplers auf ein erfindungsgemäßes Transportfahrzeug in einfacher Weise zu ermöglichen, ist vorzugsweise am fahrzeugseitigen, hinteren Ende der Staplerfläche eine bis auf den Boden bewegbare, vorzugsweise verschwenkbare Rampe vorgesehen. Während des Transports kann diese Rampe, wenn sie beispielsweise am Ende des unteren Rahmens angelenkt ist, nach oben verschwenkt werden und verhindert ein mögliches Abrutschen des Gabelstaplers von der Staplerfläche. Es versteht sich, daß statt der Rampe auch ein Hebezeug vorgesehen sein kann.

Während es die nach unten versetzte Staplerfläche aufgrund des geringen zu überwindenden Höhenunterschieds bei vorgegebener Rampenlänge überhaupt ermöglicht, den Stapler über eine Rampe aufzuladen, ist es in einer besonders vorteilhaften Ausführungsform der Erfindung darüberhinaus vorgesehen, daß das hintere Ende der Staplerfläche bzw. des unteren Rahmens nach unten hin abgebogen ist. Diese Ausführungsform bietet den Vorteil, daß die von dem Stapler zu überwindende Steigung beim Aufladen auf das erfindungsgemäße Fahrzeug noch geringer wird, so daß sich das Aufladen leicht bewerkstelligen läßt.

Um zu gewährleisten, daß ein Stapler sicher auf das erfindungsgemäße Fahrzeug aufgeladen bzw. heruntergefahren werden kann, ist zumindest im Bereich der Ausnehmung des oberen Rahmens eine vorzugsweise geschlossene Abdeckung auf dem unteren Rahmen angeordnet. Dabei versteht es sich, daß diese Abdeckung derart dimensioniert ist, daß sie den Gabelstapler tragen kann.

Um insbesondere in Kurvenfahrten einen seitlichen Halt für den aufgeladenen Gabelstapler zu bieten, ist die Staplerfläche seitlich von Bereichen begrenzt, die über das Tiefbett überstehen. Wenn sich die oberen Flächen der seitlichen Bereiche auf demselben Niveau befinden, wie die Ladefläche, d. h. mit dieser ausgefluchtet sind, können diese seitlichen Bereiche auch ohne weiteres zum Aufladen von Gütern verwendet werden und als Ladefläche dienen. Hierdurch wird sichergestellt, daß bei einem erfindungsgemäßen Fahrzeug mit aufgeladenem Gabelstapler eine maximal mögliche Fläche zum Laden verwendet wird.

Eine konstruktiv besonders vorteilhafte Ausführungsform der Anordnung der seitlichen Bereiche und der Gewährleistung eines einheitlichen Niveaus der Ladefläche sieht vor, daß der obere Rahmen im hinteren Bereich U-förmig ausgebildet ist. Da der obere Rahmen mit dem unteren Rahmen über die vorgenannten Verbindungselemente verbunden ist, wird durch die beiden seitlichen Schenkel oder Bereich des oberen Rahmens eine sehr starre Rahmenkonstruktion aus Ober- und Unterrahmen hergestellt, so daß gleichzeitig sichergestellt ist, daß der Gesamtrahmen bzw. das gesamte Chassis durch die Ausbildung und Anordnung der Staplerfläche nicht geschwächt ist.

Insbesondere wenn Großmärkte beliefert werden, ist es erforderlich, große Mengen an Transportgut zu befördern. In diesem Falle oder wenn ein Stapler in dem jeweiligen Ladengeschäft vorhanden ist, sieht die Erfindung eine Deckplatte vor, die oberhalb der Staplerfläche angeordnet werden kann und deren lichte Abmaße wenigstens den Abmaßen der Staplerfläche entsprechen. Wenn die Deckplatte darüberhinaus derart oberhalb der Staplerfläche anordenbar ist, daß die Oberseite der Deckplatte mit der Ladefläche ausgefluchtet ist, ergibt sich eine insgesamt ebene und große Ladefläche.

Schließlich bietet es sich aus Stabilitätsgründen an, zumindest einen Bereich der Staplerfläche oberhalb eines Achsaggregats des Fahrzeugs anzuordnen, so daß die nicht unerheblichen Gewichtskräfte des Gabelstaplers direkt auf die Achse wirken und die entstehenden Momente sich in einem erträglichen Rahmen halten. Das ist insbesondere bei einer Leerfahrt mit aufgeladenem Gabelstapler wichtig.

Weitere Ziele, Merkmale, Vorteile und Anwendungsmöglichkeiten der Erfindung ergeben sich aus der nachfolgenden Beschreibung von Ausführungsbeispielen anhand der Zeichnung und der Zeichnung selbst. Dabei bilden alle beschriebenen und/oder bildlich dargestellten Merkmale für sich oder in beliebiger sinnvoller Kombination den Gegenstand der Erfindung, auch unabhängig von ihrer Zusammenfassung in den Ansprüchen oder deren Rückbeziehung.

Es zeigen:
- Fig. 1: eine Draufsicht eines erfindungsgemäßen Fahrzeuges in teilweise geschnittener Darstellung und
- Fig. 2: eine Seitenansicht des Fahrzeuges aus Fig. 1 in Pfeilrichtung A aus Fig. 1.

Obwohl sich die Erfindung sowohl auf Fahrzeuge mit Ladefläche und insbesondere Lastkraftwagen, aber auch auf Auflieger bezieht, sei im folgenden lediglich auf ein erfindungsgemäßes Fahrzeug 1 eingegangen, da das Grundprinzip der Erfindung für sämtliche Fahrzeuge das gleiche ist. Wenn im folgenden von Anhäger gesprochen wird, so versteht es sich, daß sich diese Bezeichnung dann auch auf ein erfindungsgemäßes Fahrzeug oder einen Sattelauflieger bezieht.

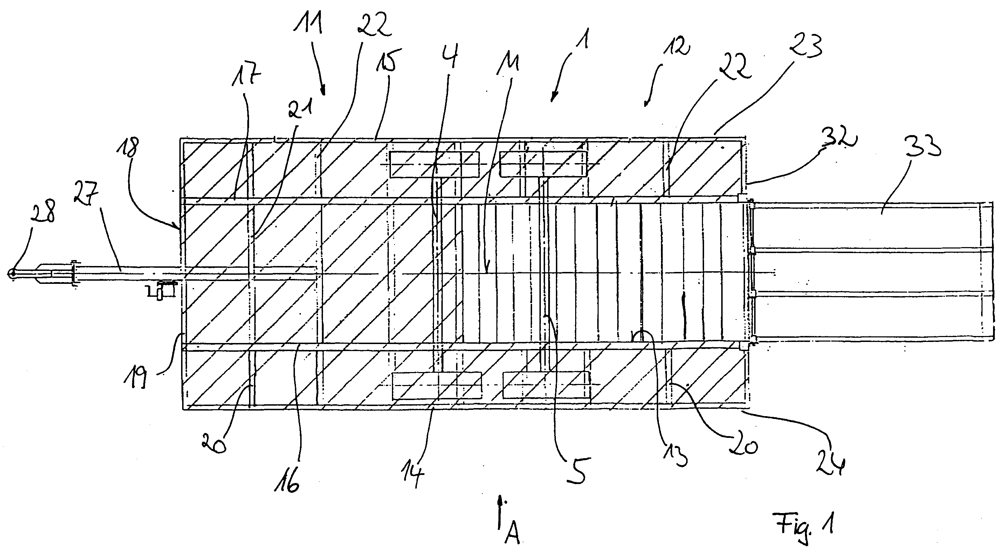

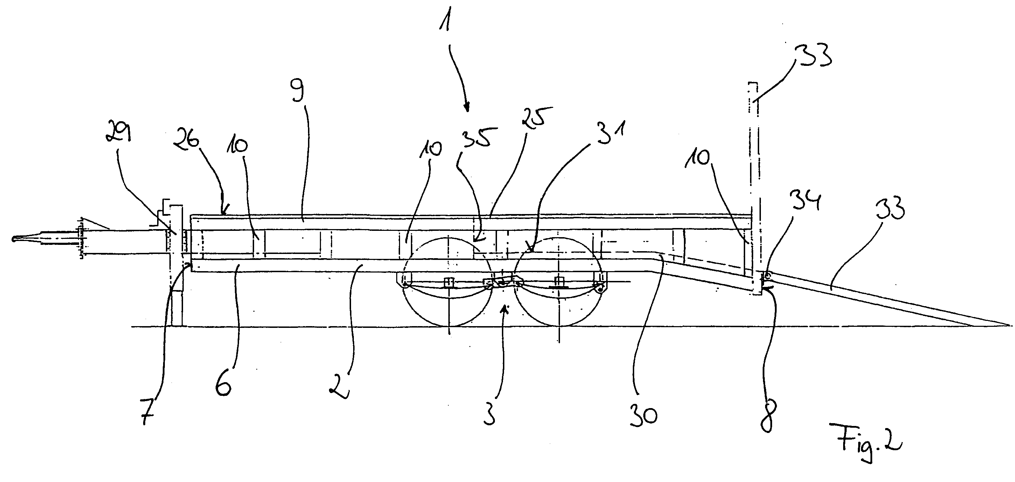

Der in den Fig. 1 und 2 gezeigte erfindungsgemäße Anhänger 1 weist einen unteren Rahmen 3 auf, der, in Draufsicht gemäß Fig. 1 gesehen, eine Rechteckform hat. Bei diesem Rahmen handelt es sich um einen geschlossenen Rahmen. Mit dem unteren Rahmen 2 verbunden ist ein Achsaggregat 3, das in diesem Falle zwei Achsen 4, 5 aufweist. Der geschlossene Rahmen weist zwei äußere Längsträger 6 auf, von denen in Fig. 2 lediglich ein Längsträger ersichtlich ist. Des weiteren ist der Rahmen 2 mit zwei äußeren Querträgern 7, 8 verbunden. Zur Versteifung des gesamten Rahmens 2 kann dieser außerdem wenigstens zwei Längsverstrebungen aufweisen, die parallel zu den Längsträgern verlaufen und Querverstrebungen, die parallel zu den Querträgern 7, 8 verlaufen. In den Figuren sind die Längs- und Querverstrebungen jedoch nicht ersichtlich. Bei den Verstrebungen und den Trägern 6 bis 8 kann es sich sowohl um Hohlprofile als auch beispielsweise um U-förmige Rahmenprofilteile handeln, die an den jeweiligen Kreuzpunkten miteinander verschweißt sein können.

Der erfindungsgemäße Anhänger 1 weist neben seinem unteren Rahmen noch einen oberen Rahmen 9 auf. Der obere Rahmen 9 und der untere Rahmen 2 sind über eine Mehrzahl von Verbindungselementen 10 miteinander verbunden und beabstandet. Die Anordnung vom oberen Rahmen in Bezug auf den unteren Rahmen ist derart, daß zumindest im vorderen Bereich 11 des Anhängers 1 der obere und der untere Rahmen in etwa deckungsgleich sind. Im hinteren Bereich 12 ist der obere Rahmen jedoch mit einer Ausnehmung 13 versehen. Die Ausnehmung 13 ist längen- und breitenmäßig so bemessen, daß ein Gabelstapler darin angeordnet werden kann.

Der obere Rahmen 9 setzt sich wie der untere Rahmen 2 aus zwei Längsträgern 14 und 15, sowie zwei dazu parallel verlaufende Längsverstrebungen 16, 17 zusammen. Darüberhinaus weist der obere Rahmen 9 an seinem vorderen Ende 18 einen Querträger 19 auf, mit dem die Längsträger 14, 15 und die Längsverstrebungen 16, 17 verbunden sind. Zwischen den Längsträgern und - verstrebungen befinden sich parallel zum Querträger 19 verlaufende Querverstrebungen 20, 21, 22. Im Bereich der Ausnehmung 13 sind die mittleren Querverstrebungen 21 weggelassen, so daß lediglich zwischen dem Längsträger 15 und der Längsverstrebung 17 einerseits und dem Längsträger 14 und der Längsverstrebung 16 andererseits seitliche Querverstrebungen 22 und 20 vorhanden sind.

Durch die Weglassung der mittleren Querverstrebungen im Bereich der Ausnehmung 13 ist der obere Rahmen in seinem hinteren Bereich 12 U-förmig mit zwei Seitenbereichen 23, 24 ausgebildet. Sowohl oberhalb der Seitenbereiche 23, 24 als auch auf dem vorderen Bereich 11 des Rahmens 9 befindet sich eine Ladeplatte 25, die einteilig oder mehrteilig ausgebildet sein kann. Die Oberseite der Ladeplatte 25 bildet die Ladefläche 26. Die Ladefläche 26 ist durch die Ladeplatte im wesentlichen vollständig geschlossen, so daß kein Transportgut durch die Ladeplatte 25 hindurch fallen kann.

Ein Anhängerbalken 27 ist entlang der Mittelachse M des Anhängers 1 mit dem oberen Rahmen 9 verbunden und steht über diesen über. Der Anhängerbalken 27 ist mit einem üblichen Kupplungsauge 28 versehen und weist weiterhin einen etwa vertikal stehenden Stützbalken 29 auf. Stützbalken 29 sowie Anhängerbalken 27 stellen an sich bekannte Elemente dar, auf die nicht näher eingegangen werden muß. Statt der Befestigung des Fahrzeuges 27 am oberen Rahmen 9 kann dieser selbstverständlich auch am unteren Rahmen 7 oder an beiden Rahmen befestigt sein.

Im Bereich der Ausnehmung 13 ist auf dem unteren Rahmen 2 eine Abdeckung 30 angeordnet. Bei der Abdeckung 30 handelt es sich an sich um eine geschlossene ein- oder mehrteilige Deckplatte, welche die Zwischenräume zwischen den Quer- und Längsträgern sowie Quer- und Längsverstrebungen des unteren Rahmens abdeckt. Die Oberseite der Abdeckung 30 bildet die Staplerfläche 31 bzw. das Tiefbett für einen Gabelstapler. Am hinteren Ende des hinteren Bereichs 12 ist der Rahmen nach unten hin abgebogen. Dementsprechend sind die Verbindungselemente 10 im Bereich der Abbiegung größer als in dem Bereich, in dem der obere Rahmen 9 parallel zum unteren Rahmen 2 verläuft.

An das hintere Ende 32 des unteren Rahmens 2 ist eine verschwenkbare Rampe 33 angelenkt. In Fig. 2 ist die Rampe 33 in durchgezogenen Linien in heruntergeschwenkter Stellung gezeigt, während in gestrichelten Linien die hochgeschwenkte Stellung angedeutet ist. Die Verbindung der Rampe 33 mit dem unteren Rahmen 2 erfolgt über ein Gelenk 34, wobei die Rampe derart angeordnet ist, daß ihre Oberseite etwa mit der Oberseite der Abdeckung 30 ausgefluchtet ist bzw. in diese übergeht.

Die Stufe 35 von der Ladefläche 26 zur Staplerfläche 31 kann in Richtung zum vorderen Ende 18 des Anhängers geöffnet sein, so daß ein Stapler mit seiner Gabel in diesen Zwischenraum zwischen oberem und unterem Rahmen hineinfahren kann, wenn dies erforderlich ist.

Die Staplerfläche 31 bzw. das Tiefbett kann im Bedarfsfall über eine nicht näher dargestellte Deckplatte abgedeckt werden. Die Deckplatte ist derart bemessen, daß sie auf der Ebene der Ladefläche 26 das Tiefbett bzw. die Staplerfläche 31 vollständig abdeckt. Auf diese Weise entsteht eine vergrößerte Ladefläche. Die Anordnung der Deckplatte kann beispielsweise derart erfolgen, daß die Ladeplatte 25 in den Seitenbereichen 23, 24 nur teilweise auf den Längsverstrebungen 16, 17 aufliegt, so daß noch ein Auflagerand für die Deckplatte vorhanden ist.

### Bezugszeichenliste:

- 1: Fahrzeug
- 2: unterer Rahmen
- 3: Achsaggregat
- 4: Achse
- 5: Achse
- 6: Längsträger
- 7: Querträger
- 8: Querträger
- 9: oberer Rahmen
- 10: Verbindungselement
- 11: vorderer Bereich
- 12: hinterer Bereich
- 13: Ausnehmung
- 14: Längsträger
- 15: Längsträger
- 16: Längsverstrebung
- 17: Längsverstrebun
- 18: vorderes Ende
- 19: Querträger
- 20: Querverstrebung
- 21: Querverstrebung
- 22: Querverstrebun
- 23: Seitenbereich
- 24: Seitenbereich
- 25: Ladeplatte
- 26: Ladefläche
- 27: Anhängerbalken
- 28: Kupplungsauge
- 29: Stützbalken
- 30: Abdeckung
- 31: Staplerfläche
- 32: hinteres Ende
- 33: Rampe
- 34: Gelenk
- 35: Stufe
- M: Mittelachse

## Patentansprüche

1. Gütertransportfahrzeug (1) mit einer Ladefläche (26), die auf einem oberen Rahmen (9) angeordnet ist, und einem gegenüber dem oberen Rahmen (9) nach unten versetzten unteren Rahmen (2), der durch Verbindungselemente im Abstand vom oberen Rahmen (9) angeordnet ist und eine weitere Fläche bildet, die als Gabelstaplerfläche (31) am hinteren Ende des Fahrzeuges (1) angeordnet ist, dadurch gekennzeichnet, daß die beiden Rahmen (2, 9) in der Draufsicht im wesentlichen deckungsgleich sind und der obere Rahmen (9) derart ausgespart oder verkürzt ist, daß die Staplerfläche (31) längen- und breitenmäßig der Anordnung des Gabelstaplers entspricht und sich bis zum hinteren Ende des Fahrzeuges (1) erstreckt.

2. Gütertransportfahrzeug nach Anspruch 1, dadurch gekennzeichnet, daß am hinteren Ende (32) der Staplerfläche (31) eine bis auf den Boden bewegbare, vorzugsweise verschwenkbare Rampe vorgesehen ist, die insbesondere am hinteren Ende des unteren Rahmens (2) angelenkt ist.

3. Gütertransportfahrzeug nach Anspruch 2, dadurch gekennzeichnet, daß das hintere Ende (32) der Staplerfläche (31) oder des unteren Rahmens (2) nach unten hin abgebogen ist.

4. Gütertransportfahrzeug nach einem oder mehreren der vorhergehenden Ansprüche, dadurch gekennzeichnet, daß zumindest im Bereich der Ausnehmung (13) des oberen Rahmens (9) eine vorzugsweise geschlossene Abdeckung (30) auf dem unteren Rahmen (2) angeordnet ist, welche der dimensioniert ist, um einen Gabelstapler zu tragen.

5. Gütertransportfahrzeug nach einem oder mehreren der vorhergehenden Ansprüche, dadurch gekennzeichnet, daß die Staplerfläche (31) seitlich von Bereichen (23, 24) begrenzt ist, die über die Staplerfläche überstehen.

6. Gütertransportfahrzeug nach Anspruch 5, dadurch gekennzeichnet, daß die oberen Flächen der seitlichen Bereiche (23, 24) sich auf demselben Niveau befinden wie die Ladefläche (26).

7. Gütertransportfahrzeug nach einem oder mehreren der vorhergehenden Ansprüche, dadurch gekennzeichnet, daß der obere Rahmen (9) im hinteren Bereich (12) U-förmig ausgebildet ist.

8. Gütertransportfahrzeug nach einem oder mehreren der vorhergehenden Ansprüche, dadurch gekennzeichnet, daß eine Deckplatte vorgesehen ist, die oberhalb der Staplerfläche (31) angeordnet ist, deren lichte Abmaße wenigstens den Abmaßen der Staplerfläche (31) entsprechen.

9. Gütertransportfahrzeug nach Anspruch 8, dadurch gekennzeichnet, daß die Deckplatte derart oberhalb der Staplerfläche (31) angeordnet ist, daß die Oberseite der Deckplatte mit der Ladefläche (26) ausgefluchtet ist.

10. Gütertransportfahrzeug nach einem oder mehreren der vorhergehenden Ansprüche, dadurch gekennzeichnet, daß wenigstens ein Bereich der Staplerfläche (31) oberhalb eines Achsaggregats (3) des Fahrzeugs (1) vorgesehen ist.

## Claims

1. Vehicle for transporting goods (1) with a loading area (26) arranged on an upper frame (9) and with a lower frame (2) displaced in downward direction with respect to the upper frame (9), said lower framed being spaced from the upper frame (9) by connection members and forming a further area arranged at the rear end of the vehicle (1) as fork truck area (31), characterized in that said two frames (2, 9) seen from top are essentially congruent and that the upper frame (9) is recessed or shortened such that the truck area (31) with respect to length and width corresponds to the arrangement of the fork truck and extends until the rear end of the vehicle (1).

2. Vehicle for transporting goods as defined in claim 1, characterized in that on the rear end (32) of the truck area (31) a ramp movable up to the ground and preferably being pivotable is provided for which is connected to the rear end of the lower frame (2) in particular.

3. Vehicle for transporting goods as defined in claim 2, characterized in that the rear end (32) of said truck area (31) od of the lower frame (2) is bent in downward direction.

4. Vehicle for transporting goods as defined in one or several of the preceding claims, characterized in that at least in the area of the recess (13) of the upper frame (9) a preferably closed cover (30) is arranged on said lower frame (2), said cover being dimensioned for carrying a fork truck.

5. Vehicle for transporting goods as defined in in one or several of the preceding claims, characterized in that said truck area (31) is laterally limited by regions (23, 24) projecting over the truck area.

6. Vehicle for transporting goods as defined in claim 5, characterized in that the upper areas of the lateral regions (23, 24) are on the same level as the loading area (26).

7. Vehicle for transporting goods as defined in one or several of the preceding claims, characterized in that said upper frame (9) in the rear area (12) is made U-shaped.

8. Vehicle for transporting goods as defined in one or several of the preceding claims, characterized in that a cover plate is provided for which is arranged above the truck area (31) whose clear dimensions at least correspond to the dimensions of the truck area (31).

9. Vehicle for transporting goods as defined in claim 8, characterized in that said cover plate is arranged above the truck area (31) such that the upper side of said cover plate is in line with the loading area (26).

10. Vehicle for transporting goods as defined in one or several of the preceding claims, characterized in that at least one region of said truck area (31) is provided for above an axle unit (3) of said vehicle (1).

## Revendications

1. Véhicule pour le transport de marchandises (1) avec une surface de chargement (26) qui est disposée sur un cadre supérieur (9), et un cadre inférieur (2) décalé vers le bas par rapport au cadre supérieur (9), cadre inférieur qui est disposé avec un écartement par rapport au cadre supérieur (9) par l'intermédiaire d'éléments d'assemblage et forme une surface plus large qui est disposée en tant que surface de chariot à fourche (31) à l'extrémité arrière du véhicule (1), caractérisé en ce que, dans la vue de dessus, les deux cadres (2, 9) sont pour l'essentiel coïncidents et en ce que le cadre supérieur (9) est évidé et réduit de façon à ce que la surface du chariot (31) corresponde en longueur et en largeur à la disposition du chariot à fourche et s'étende jusqu'à l'extrémité arrière du véhicule (1).

2. Véhicule pour le transport de marchandises selon la revendication 1, caractérisé en ce que, à l'extrémité arrière (32) de la surface du chariot (31), est prévue une rampe pouvant être déplacée jusque sur le sol et, de préférence, pivotable, rampe qui est articulée, notamment à l'extrémité arrière du cadre inférieur (2).

3. Véhicule pour le transport de marchandises selon la revendication 2, caractérisé en ce que l'extrémité arrière (32) de la surface du chariot (31) ou du cadre inférieur (2) est courbée vers le bas.

4. Véhicule pour le transport de marchandises selon l'une ou plusieurs des revendications précédentes, caractérisé en ce qu'au moins dans la zone du creux (13) du cadre supérieur (9), un recouvrement (30) de préférence fermé est disposé sur le cadre inférieur (2), recouvrement qui est dimensionné pour porter un chariot à fourche.

5. Véhicule pour le transport de marchandises selon l'une ou plusieurs des revendications précédentes, caractérisé en ce que la surface du chariot (31) est limitée latéralement par des zones qui débordent au-dessus de cette surface.

6. Véhicule pour le transport de marchandises selon la revendication 5, caractérisé en ce que les surfaces supérieures des zones latérales (23, 24) se trouvent au même niveau que la surface de chargement (26).

7. Véhicule pour le transport de marchandises selon l'une ou plusieurs des revendications précédentes, caractérisé en ce que le cadre supérieur (9) est conçu en forme de U dans la zone arrière (12).

8. Véhicule pour le transport de marchandises selon l'une ou plusieurs des revendications précédentes, caractérisé en ce qu'est prévue une plaque de recouvrement qui est disposée au-dessus de la surface du chariot (31) dont les dimensions intérieures correspondent au moins aux dimensions de la surface du chariot (31).

9. Véhicule pour le transport de marchandises selon la revendication 8, caractérisé en ce que la plaque de recouvrement est disposée de telle façon au-dessus de la surface du chariot (31) que la face supérieure de la plaque de recouvrement est alignée avec la surface de chargement (26).

10. Véhicule pour le transport de marchandises selon l'une ou plusieurs des revendications précédentes, caractérisé en ce qu'au moins une zone de la surface du chariot (31) est prévue au-dessus d'un groupe d'essieux (3) du véhicule (1).
